# EUROPEAN PATENT APPLICATION

(11) **EP 4 800 313 A1**
(43) Date of publication of application: **02.09.2026**
(21) Application number: 25794939.6
(22) Date of filing: 21.03.2025
(51) Int. Cl.: F24F 11/65, F24F 11/79, F24F 11/32, G01S 13/88, F24F 11/46, F24F 1/0007, F24F 11/63, F24F 120/14, F24F 120/12, F24F 13/20

(54) **AIR CONDITIONER AND METHOD FOR CONTROLLING SAME**

(30) Priority: 25.04.2024 KR 20240055531; 25.04.2024 KR 20240055541; 30.08.2024 KR 20240117806
(71) Applicant: Samsung Electronics Co., Ltd., Suwon-si, Gyeonggi-do 16677 (KR)
(72) Inventor: KIM, Donghyun, Suwon-si Gyeonggi-do 16677 (KR); JEON, Mingu, Suwon-si Gyeonggi-do 16677 (KR); HONG, Jinwoo, Suwon-si Gyeonggi-do 16677 (KR); CHO, Hyeongkyu, Suwon-si Gyeonggi-do 16677 (KR); HWANG, Jun, Suwon-si Gyeonggi-do 16677 (KR); NO, Heedong, Suwon-si Gyeonggi-do 16677 (KR); JOO, Youngju, Suwon-si Gyeonggi-do 16677 (KR); JEE, Yongkeun, Suwon-si Gyeonggi-do 16677 (KR); CHOI, Hyeonghwan, Suwon-si Gyeonggi-do 16677 (KR); HUR, Jaehun, Suwon-si Gyeonggi-do 16677 (KR)
(74) Representative: Gulde & Partner
(86) International application number: PCT/KR2025/003640
(87) International publication number: WO 2025/225893

(57) **Abstract**

An air conditioner may include: a motion detection sensor configured to detect a movement of an object; at least one processor; a memory comprising instructions configured to cause the at least one processor to: determine, based on the motion detection sensor detecting the object, an activity amount of the object via the motion detection sensor, determine, based on the activity amount of the object satisfying a predetermined first condition, whether a number of second predetermined time sections, in a first predetermined time section, in which the object is detected via the motion detection sensor satisfies a predetermined second condition, or whether the activity amount of the object detected via the motion detection sensor in the first predetermined time section satisfies a predetermined third condition, and determine, based on determining that the predetermined second condition or the predetermined third condition is satisfied, that the object exists.

## Description

### [Technical Field]

Embodiments of the present disclosure relate to an air conditioner that controls an operation error according to a ghost phenomenon of a motion detection sensor, and a control method thereof.

### [Background Art]

As smart air conditioners have been distributed, an air conditioner has become capable of identifying whether a user is present and adjusting its operation by itself.

An air conditioner can identify whether a user is present by using a sensor. However, there may be a case wherein a sensor wrongly identifies that a user is present although the user is absent. Accordingly, a situation wherein an operation of the air conditioner continues although the user is absent, and power is wasted, may occur.

Also, an air conditioner may control wind according to a location of a user. In this case, if a detection error of the sensor occurs, confusion may be caused to the operation of the air conditioner.

Accordingly, there is a rising need for a method for determining whether a user is present more correctly, and a method for preventing an operation according to a detection error of a sensor.

### [Disclosure]

### [Technical Solution]

According to embodiments of the present disclosure, an air conditioner may be provided and include: a motion detection sensor configured to detect a movement of an object in a space; at least one processor including processing circuitry; a memory including instructions, wherein the instructions are configured to, when executed individually or collectively by the at least one processor, cause the at least one processor to: determine, based on the motion detection sensor detecting the object, an activity amount of the object via the motion detection sensor, determine, based on the activity amount of the object satisfying a predetermined first condition, whether a number of second predetermined time sections, in a first predetermined time section, in which the object is detected via the motion detection sensor satisfies a predetermined second condition, or whether the activity amount of the object detected via the motion detection sensor in the first predetermined time section satisfies a predetermined third condition, and determine, based on determining that the predetermined second condition or the predetermined third condition is satisfied, that the object exists in the space.

According to one or more embodiments of the present disclosure, the air conditioner further includes a fan configured to blow cooled air to an outside of the air conditioner, wherein the instructions are further configured to, when executed individually or collectively by the at least one processor, cause the at least one processor to: determine that a plurality of objects, including the object, exist; and control, based on determining that the plurality of objects exists, a blowing direction of the cooled air blown by the fan on a basis of a nearest object to the air conditioner among the plurality of objects.

According to one or more embodiments of the present disclosure, the instructions are further configured to, when executed individually or collectively by the at least one processor, cause the at least one processor to: determine whether a first object, among the plurality of objects, is located at a first distance from the air conditioner, and a second object, among the plurality of objects, is located at a second distance from the air conditioner, the second distance being greater than the first distance, and control, based on determining that the first object and the second object are located at the first distance and the second distance, respectively, the blowing direction of the cooled air blown by the fan on the basis of the first object located at the near distance.

According to one or more embodiments of the present disclosure, the instructions are further configured to, when executed individually or collectively by the at least one processor, cause the at least one processor to: blow the cooled air in a direct wind mode and an indirect wind mode; blow, based on a blowing mode of the air conditioner being the direct wind mode, the cooled air in a direction towards a ground in a case where the cooled air is blown by the fan on the basis of the first object being located at the near distance, and blow, based on the blowing mode of the air conditioner being the indirect wind mode, the cooled air in a direction towards a ceiling in a case where the cooled air is blown by the fan on the basis of the first object being located at the near distance.

According to one or more embodiments of the present disclosure, the instructions are further configured to, when executed individually or collectively by the at least one processor, cause the at least one processor to: determine, based on the activity amount not satisfying the predetermined first condition, that the object does not exist in the space.

According to one or more embodiments of the present disclosure, the instructions are further configured to, when executed individually or collectively by the at least one processor, cause the at least one processor to: determine a coordinate value of the object via the motion detection sensor, and determine the activity amount of the object based on determining a moving speed of the object based on the coordinate value of the object.

According to one or more embodiments of the present disclosure, the instructions are further configured to, when executed individually or collectively by the at least one processor, cause the at least one processor to: determine, based on determining that the object moved during a predetermined time or longer at a moving speed of a predetermined magnitude or larger on a basis of the moving speed of the object that was determined, that the activity amount of the object satisfies the predetermined first condition.

According to one or more embodiments of the present disclosure, the instructions are further configured to, when executed individually or collectively by the at least one processor, cause the at least one processor to: determine, based on the number of the second predetermined time sections not satisfying the predetermined second condition and the activity amount of the object not satisfying the predetermined third condition, that the object does not exist in the space.

According to one or more embodiments of the present disclosure, the motion detection sensor is a radar sensor.

According to embodiments of the present disclosure, a control method of an air conditioner may be provided and include: detecting an object via a motion detection sensor; determining, based on the detecting of the object via the motion detection sensor, an activity amount of the object via the motion detection sensor; determining whether the activity amount of the object satisfies a predetermined first condition; determining, based on the activity amount of the object satisfying the predetermined first condition, whether a number of second predetermined time sections, in a first predetermined time section, in which the object is detected via the motion detection sensor satisfies a predetermined second condition, or whether the activity amount of the object detected via the motion detection sensor in the first predetermined time section satisfies a predetermined third condition; and determining, based on determining whether the predetermined second condition or the predetermined third condition is satisfied, whether the object exists in a space.

According to one or more embodiments of the present disclosure, the control method further includes: determining that a plurality of objects, including the object, exist; and controlling, based on determining that the plurality of objects exists, a blowing direction of cooled air, blown by a fan, on a basis of a nearest object to the air conditioner among the plurality of objects.

According to one or more embodiments of the present disclosure, the controlling the blowing direction of the cooled air comprises:

determining whether a first object, among the plurality of objects, is located at a first distance from the air conditioner, and a second object, among the plurality of objects, is located at a second distance from the air conditioner, the second distance being greater than the first distance; and controlling, based on determining that the first object and the second object are located at the first distance and the second distance, respectively, the blowing direction of the cooled air on the basis of the first object located at the near distance.

According to one or more embodiments of the present disclosure, the controlling the blowing direction of the cooled air further includes:

blowing, based on a blowing mode of the air conditioner being a direct wind mode, the cooled air in a direction towards a ground in a case where the cooled air is blown by the fan on the basis of the first object being located at the near distance; or blowing, based on the blowing mode of the air conditioner being an indirect wind mode, the cooled air in a direction towards a ceiling in a case where the cooled air is blown by the fan on the basis of the first object being located at the near distance.

According to one or more embodiments of the present disclosure, wherein the determining the activity amount of the object includes: determining a coordinate value of the object; and determining the activity amount of the object by identifying a moving speed of the object based on the coordinate value of the object.

According to one or more embodiments of the present disclosure, the determining whether the object exists in the space includes determining,

based on determining that the predetermined second condition or the predetermined third condition is satisfied, that the object exists in the space.

According to one or more embodiments of the present disclosure, the determining whether the object exists in the space includes determining based on the number of the second predetermined time sections not satisfying the predetermined second condition and the activity amount of the object not satisfying the predetermined third condition, that the object does not exist in the space.

According to one or more embodiments of the present disclosure, a non-transitory computer readable medium may be provided and include instructions that are configured to, when executed by at least one processor of an air conditioner, cause the at least one processor to: detect an object via a motion detection sensor; determine, based on the detecting of the object via the motion detection sensor, an activity amount of the object via the motion detection sensor; determine whether the activity amount of the object satisfies a predetermined first condition; determine, based on the activity amount of the object satisfying the predetermined first condition, whether a number of second predetermined time sections, in a first predetermined time section, in which the object is detected via the motion detection sensor satisfies a predetermined second condition, or whether the activity amount of the object detected via the motion detection sensor in the first predetermined time section satisfies a predetermined third condition; and determine, based on determining whether the predetermined second condition or the predetermined third condition is satisfied, whether the object exists in a space.

According to one or more embodiments of the present disclosure, the instructions are further configured to, when executed by at least one processor, cause the at least one processor to: determine that a plurality of objects, including the object, exist; and control, based on determining that the plurality of objects exists, a blowing direction of cooled air, blown by a fan, on a basis of a nearest object to the air conditioner among the plurality of objects.

According to one or more embodiments of the present disclosure, the instructions are further configured to, when executed by at least one processor, cause the at least one processor to: determine whether a first object, among the plurality of objects, is located at a first distance from the air conditioner, and a second object, among the plurality of objects, is located at a second distance from the air conditioner, the second distance being greater than the first distance; and control, based on determining that the first object and the second object are located at the first distance and the second distance, respectively, the blowing direction of the cooled air on the basis of the first object located at the near distance.

According to one or more embodiments of the present disclosure, the instructions are further configured to, when executed by at least one processor, cause the at least one processor to: blow, based on a blowing mode of the air conditioner being a direct wind mode, the cooled air in a direction towards a ground in a case where the cooled air is blown by the fan on the basis of the first object being located at the near distance; and blow, based on the blowing mode of the air conditioner being an indirect wind mode, the cooled air in a direction towards a ceiling in a case where the cooled air is blown by the fan on the basis of the first object being located at the near distance.

### [Description of Drawings]

FIG. 1 is a diagram illustrating a situation wherein an air conditioner identifies a user according to at least one embodiment of the present disclosure;
FIG. 2 is a diagram for illustrating an air conditioner according to at least one embodiment of the present disclosure;
FIG. 3 is a block diagram for illustrating a configuration of an air conditioner according to at least one embodiment of the present disclosure;
FIG. 4 is a block diagram for illustrating a detailed configuration of an air conditioner according to at least one embodiment of the present disclosure;
FIG. 5 is a flow chart for illustrating a control method of an air conditioner according to at least one embodiment of the present disclosure;
FIG. 6 and FIG. 7 are diagrams for illustrating a case wherein a sensor has a wrong measurement value according to at least one embodiment of the present disclosure;
FIG. 8 and FIG. 9 are tables for determining whether an object is present according to at least one embodiment of the present disclosure;
FIG. 10 is a flow chart for illustrating a condition for an air conditioner to determine absence of a user according to at least one embodiment of the present disclosure;
FIG. 11 is a block diagram for illustrating a process wherein a plurality of processors communicate with a motion detection sensor according to at least one embodiment of the present disclosure;
FIG. 12 is a flow chart for illustrating a control method when an air conditioner detected a plurality of objects according to at least one embodiment of the present disclosure;
FIG. 13 is a diagram for illustrating a method for an air conditioner to divide a space according to at least one embodiment of the present disclosure;
FIG. 14 is a table for illustrating a standard for an air conditioner to divide a space according to at least one embodiment of the present disclosure; and
FIG. 15 is a table for illustrating a near distance and a far distance in a divided space according to at least one embodiment of the present disclosure.

### [Mode for Invention]

The various example embodiments described in the present disclosure, and the terms used to describe the example embodiments, do not limit the present disclosure to a specific embodiment(s), and the present disclosure includes various modifications, equivalents, or alternatives of the example embodiments.

Also, with respect to the detailed description of the drawings, similar or related components may be designated by similar reference numerals.

In addition, a singular form of a noun corresponding to an item may include one of the item or a plurality of the items, unless instructed obviously differently in the related context.

Further, in the present disclosure, each of the expressions "A or B," "at least one of A and B," "at least one of A or B," "A, B, or C," "at least one of A, B, and C," and "at least one of A, B, or C" and the like may include any one of the items listed together with the expression among the expressions, or all possible combinations of the listed items.

Also, the term "and/or" includes a combination of a plurality of related components described, or any one component among the plurality of related components described.

In addition, terms such as "first," "second," and the like may be used just to distinguish one element from another element, and are not intended to limit the elements from another aspect (e.g., the importance or the order).

Further, in case it is mentioned that one element (e.g., a first element) is "coupled" or "connected" to another element (e.g., a second element) together with the term "functionally" or "communicatively" or without such a term, it means that the one element may be connected to the another element directly (e.g., via a wire), wirelessly, or through a third element.

Also, terms such as "include," or "have" should be construed as designating that there are such characteristics, numbers, steps, operations, elements, components, or a combination thereof described in the present disclosure, but not as excluding in advance the existence or possibility of adding one or more of other characteristics, numbers, steps, operations, elements, components, or a combination thereof.

In addition, in case it is mentioned that one element is "connected with," "combined with," "supported by," or "contacted with" another element, it includes not only a case wherein the elements are directly connected, combined, supported, or contacted, but also a case wherein the elements are indirectly connected, combined, supported, or contacted through a third element.

Further, the description in the present disclosure that one element is "on top of" another element not only includes a case wherein the one element contacts the another element, but also a case wherein still another element exists between the two elements.

An air conditioner according to various embodiments may be a device that performs functions such as air purification, ventilation, humidity adjustment, cooling, or heating, etc., in an air-conditioned space (referred to as "indoors" hereinafter), and means a device including at least one of these functions.

According to an embodiment, the air conditioner may include a heat pump device for performing a cooling function or a heating function. The heat pump device may include a refrigeration cycle wherein a refrigerant is circulated along a compressor, a first heat exchanger, an expansion device, and a second heat exchanger. All components of the heat pump device may be accommodated inside one housing forming the exterior of the air conditioner, and a window air conditioner or a movable air conditioner may be examples of such an air conditioner. On the other hand, some components of the heat pump device may be separately accommodated inside a plurality of housings forming one air conditioner, and a wall-mounted type air conditioner, a stand type air conditioner, a system air conditioner, etc., may be examples of such an air conditioner.

The air conditioner including a plurality of housings may include at least one outdoor unit installed outdoors and at least one indoor unit installed indoors. As an example, the air conditioner may be provided such that one outdoor unit and one indoor unit are connected through a refrigerant pipe. As an example, the air conditioner may be provided such that one outdoor unit is connected with two or more indoor units through a refrigerant pipe. As an example, the air conditioner may be provided such that two or more outdoor units and two or more indoor units are connected through a plurality of refrigerant pipes.

The outdoor unit may be electrically connected with the indoor unit. For example, information (or a command) for controlling the air conditioner may be input through an input interface provided on the outdoor unit or the indoor unit, and the outdoor unit and the indoor unit may operate simultaneously or sequentially in response to the user input.

The air conditioner may include an outdoor heat exchanger provided on the outdoor unit, an indoor heat exchanger provided on the indoor unit, and a refrigerant pipe connecting the outdoor heat exchanger and the indoor heat exchanger.

The outdoor heat exchanger may perform heat exchange between the refrigerant and the outdoor air by using a phase change (e.g., evaporation or condensation) of the refrigerant. For example, while the refrigerant is condensed at the outdoor heat exchanger, the refrigerant may emit heat to the outdoor air, and while the refrigerant flowing in the outdoor heat exchanger evaporates, the refrigerant may absorb heat from the outdoor air.

The indoor unit is provided indoors. As an example, the indoor unit may be divided into a ceiling type indoor unit, a stand type indoor unit, a wall-mounted type indoor unit, etc., according to methods of arrangement. As an example, a ceiling type indoor unit may be divided into a 4-way type indoor unit, a 1-way type indoor unit, a duct type indoor unit, etc., according to the methods that air is blown.

Likewise, the indoor heat exchanger may perform heat exchange between the refrigerant and the indoor air by using a phase change (e.g., evaporation or condensation) of the refrigerant. For example, while the refrigerant evaporates at the indoor unit, the refrigerant may absorb heat from the indoor air, and the indoors may be cooled as the indoor air that was cooled while going through the cooled indoor heat exchanger is blown. Also, while the refrigerant is condensed at the indoor heat exchanger, the refrigerant may emit heat to the indoor air, and the indoors may be heated as the indoor air that was heated while going through the indoor heat exchanger of a high temperature is blown.

That is, the air conditioner may perform a cooling or heating function through a process of a phase change of the refrigerant circulating in the outdoor heat exchanger and the indoor heat exchanger, and for such circulation of the refrigerant, the air conditioner may include a compressor that compresses the refrigerant. The compressor may suction refrigerant gas through a suction part, and compress the refrigerant gas. The compressor may discharge the refrigerant gas of a high temperature and high pressure through a discharge part. The compressor may be arranged inside the outdoor unit.

The refrigerant may circulate in the order of the compressor, the outdoor heat exchanger, the expansion device, and the indoor heat exchanger, or circulate in the order of the compressor, the indoor heat exchanger, the expansion device, and the outdoor heat exchanger through the refrigerant pipe.

As an example, the air conditioner may be provided such that, in case one outdoor unit and one indoor unit are directly connected through the refrigerant pipe, the refrigerant circulates between the one outdoor unit and the one indoor unit through the refrigerant pipe.

As an example, in case one outdoor unit is connected with two or more indoor units through the refrigerant pipe, the refrigerant may flow to the plurality of indoor units through the refrigerant pipe that branches from the outdoor unit. The refrigerant blown at the plurality of indoor units may be provided to be joined and circulate to the outdoor unit. As an example, each of the plurality of indoor units may be directly connected in parallel to the one outdoor unit through a separate refrigerant pipe.

Each of the plurality of indoor units may be independently operated according to an operation mode set by the user. That is, some of the plurality of indoor units may be operated in the cooling mode, and at the same time, some others may be operated in the heating mode. Here, the refrigerant may be provided to be introduced into each indoor unit selectively in a high pressure state or a low pressure state along a designated circulation route through a flow channel conversion valve that will be described below, and to be blown and circulated to the outdoor unit.

As an example, when two or more outdoor units and two or more indoor units are connected through a plurality of refrigerant pipes, the refrigerant blown at the plurality of outdoor units may be joined and flow through one refrigerant pipe, and may branch again on a certain point, and may be introduced into the plurality of indoor units.

All of the plurality of outdoor units may be driven, or at least some of them may not be driven according to a driving load according to the driving amounts of the plurality of indoor units. Here, the refrigerant may be provided to be introduced into an outdoor unit that is selectively driven through the flow channel conversion valve, and to be circulated. The air conditioner may include an expansion device for lowering the pressure of the refrigerant introduced into the heat exchanger. As an example, the expansion device may be arranged inside the indoor unit or inside the outdoor unit, or may be arranged on both sides.

As an example, the expansion device may lower the temperature and the pressure of the refrigerant by using a throttling effect. The expansion device may include an orifice that can reduce the cross-sectional area of the flow channel. The temperature and the pressure of the refrigerant that passed through the orifice may be lowered.

As an example, the expansion device may be implemented as an electronic expansion valve that can adjust an opening ratio (e.g., the ratio of the cross-sectional area of the flow channel of the valve in a fully opened state to the cross-sectional area of the flow channel of the valve in a partially opened state). Dependent on the opening ratio of the electronic expansion valve, the amount of the refrigerant that passes through the expansion device may be controlled.

The air conditioner may further include a flow channel conversion valve arranged on the refrigerant circulation flow channel. The flow channel conversion valve may include, for example, a 4-way valve. The flow channel conversion valve may determine the circulation route of the refrigerant based on the driving mode (e.g., cooling driving or heating driving) of the indoor unit. The flow channel conversion valve may be connected to the discharge part of the compressor.

The air conditioner may include an accumulator. The accumulator may be connected to the suction part of the compressor. Into the accumulator, the refrigerant of a low temperature and low pressure that evaporated in the indoor heat exchanger or the outdoor heat exchanger may be introduced.

The accumulator may separate the refrigerant liquid from the refrigerant gas when the refrigerant, wherein the refrigerant liquid and the refrigerant gas are mixed, is introduced, and provide the refrigerant gas from which the refrigerant liquid has been separated to the compressor.

In the vicinity of the outdoor heat exchanger, an outdoor fan may be provided. The outdoor fan may blow the outdoor air to the outdoor heat exchanger such that heat exchange between the refrigerant and the outdoor unit is promoted.

The outdoor unit of the air conditioner may include at least one sensor. As an example, the sensor of the outdoor unit may be provided as an environment sensor. The outdoor unit sensor may be arranged in any location inside or outside the outdoor unit. As an example, the outdoor unit sensor may include, for example, a temperature sensor for detecting the temperature of the air around the outdoor unit, a humidity sensor for detecting the humidity of the air around the outdoor unit, a refrigerant temperature sensor for detecting the temperature of the refrigerant in the refrigerant pipe passing through the outdoor unit, or a refrigerant pressure sensor for detecting the pressure of the refrigerant in the refrigerant pipe passing through the outdoor unit.

The outdoor unit of the air conditioner may include an outdoor unit communicator. The outdoor unit communicator may be provided to receive a control signal from a controller of the indoor unit of the air conditioner that will be described below. The outdoor unit may control the operations of the compressor, the outdoor heat exchanger, the expansion device, the flow channel conversion valve, the accumulator, or the outdoor fan based on a control signal received through the outdoor unit communicator. The outdoor unit may transmit a sensing value detected from the outdoor unit sensor to the controller of the indoor unit through the outdoor unit communicator.

The indoor unit of the air conditioner may include a housing, a blower that circulates air inside or outside the housing, and an indoor heat exchanger that exchanges heat with air introduced into the housing.

The housing may include a suction hole. Through the suction hole, the indoor unit may be introduced into the housing.

The indoor unit of the air conditioner may include a filter that is provided to filter foreign substances in the air introduced into the housing through the suction hole.

The housing may include a discharge hole. The air flowing inside the housing may be discharged outside the housing through the discharge hole.

In the housing of the indoor unit, an airflow guide that guides the direction of the air discharged through the discharge hole may be provided. As an example, the airflow guide may include a blade located on the discharge hole. As an example, the airflow guide may include an auxiliary fan for adjusting the discharged airflow. However, embodiments of the present disclosure are not limited thereto, and the airflow guide may be omitted.

Inside the housing of the indoor unit, an indoor heat exchanger and a blowing device that are arranged on a flow channel connecting the suction hole and the discharge hole may be provided.

The blowing device may include an indoor fan and a fan motor. As an example, the indoor fan may include an axial flow fan, a mixed flow fan, a cross flow fan, and a centrifugal fan.

The indoor heat exchanger may be arranged between the blowing device and the discharge hole, or arranged between the suction hole and the blowing device. The indoor heat exchanger may absorb heat from the air introduced through the suction hole, or transmit heat to the air introduced through the suction hole. The indoor heat exchanger may include a heat exchange pipe wherein the refrigerant flows in the inside, and a heat exchange pin that contacts the heat exchange pipe so as to increase a heat transfer area.

The indoor unit of the air conditioner may include a drain tray that is arranged under the indoor heat exchanger, and collects condensate water generated in the indoor heat exchanger. The condensate water accommodated in the drain tray may be drained to the outside through a drain hose. The drain tray may be provided to support the indoor heat exchanger.

The indoor unit of the air conditioner may include an input interface. The input interface may include a user input means of any type including a button, a switch, a touch screen, and/or a touch pad. The user may directly input setting data (e.g., the desired indoor temperature, setting of the driving modes of cooling/heating/dehumidification/air purification, setting of selection of a blowing hole, and/or setting of the wind volume) through the input interface.

The input interface may be connected with an external input device. For example, the input interface may be electrically connected with a wired remote controller. The wired remote controller may be installed in a specific location (e.g., a part of a wall surface) of an indoor space. The user may input setting data regarding operations of the air conditioner by manipulating the wired remote controller. An electric signal corresponding to the setting data obtained through the wired remote controller may be transmitted to the input interface. Also, the input interface may include an infrared sensor. The user may remotely input the setting data regarding operations of the air conditioner by using a wireless remote controller. The setting data input through the wireless remote controller may be transmitted to the input interface as an infrared signal.

Also, the input interface may include a microphone. A voice command of the user may be obtained through the microphone. The microphone may convert the voice command of the user into an electric signal, and transmit the converted electric signal to the indoor unit controller. The indoor unit controller may control the components of the air conditioner for executing a function corresponding to the voice command of the user. The setting data obtained through the input interface (e.g., the desired indoor temperature, setting of the driving modes of cooling/heating/dehumidification/air purification, setting of selection of a blowing hole, and/or setting of the wind volume) may be transmitted to the indoor unit controller that will be described below. As an example, the setting data obtained through the input interface may be transmitted to the outside (e.g., the outdoor unit or a server) through the indoor unit controller that will be described below.

The indoor unit of the air conditioner may include a power module. The power module may be connected with an external power source, and supply power to the components of the indoor unit.

The indoor unit of the air conditioner may include an indoor unit sensor. The indoor unit sensor may be an environment sensor that is arranged in a space inside or outside the housing. As an example, the indoor unit sensor may include at least one temperature sensor and/or humidity sensor arranged in a predetermined space inside or outside the housing of the indoor unit. As an example, the indoor unit sensor may include a refrigerant temperature sensor for detecting the temperature of the refrigerant in the refrigerant pipe passing through the indoor unit. As an example, the indoor unit sensor may include respective refrigerant temperature sensors that detect the temperatures of the inlet, the middle part, and/or the outlet of the refrigerant pipe passing through the indoor heat exchanger.

As an example, the respective environment information detected by the indoor unit sensor(s) may be transmitted to the indoor unit controller that will be described below, or transmitted to the outside through the indoor unit communicator that will be described below.

The indoor unit of the air conditioner may include an indoor unit communicator. The indoor unit communicator may include at least one from among a near field communication module and a far field communication module. The indoor unit communicator may include at least one antenna for communicating with another device wirelessly. The outdoor unit may include an outdoor unit communicator. The outdoor unit communicator may also include at least one from among a near field communication module and a far field communication module.

The near field communication module (a short-range wireless communication module) may include a Bluetooth communication module, a Bluetooth Low Energy (BLE) communication module, a near field wireless communication module, a WLAN (Wi-Fi) communication module, a Zigbee communication module, an infrared data association (IrDA) communication module, a Wi-Fi Direct (WFD) communication module, an ultrawideband (UWB) communication module, an Ant+ communication module, a microwave (uWave) communication module, etc., but is not limited thereto.

The far field communication module may include communication modules that perform far field communication of various types, and may include a mobile communicator. The mobile communicator transmits and receives wireless signals with at least one from among a base station, an external terminal, and a server in a mobile communication network.

The indoor unit communicator may communicate with external devices such as a server, a mobile device, another home appliance, etc., through an ambient access point (AP). The access point (AP) may connect a local area network (LAN) to which the air conditioner or the user device is connected to a wide area network (WAN) to which the server is connected. The air conditioner or the user device may be connected to the server through the wide area network (WAN). The indoor unit of the air conditioner may include an indoor unit controller that controls the components of the indoor unit including the blowing device, etc. The outdoor unit of the air conditioner may include an outdoor unit controller that controls the components of the outdoor unit including the compressor, etc. The indoor unit controller may communicate with the outdoor unit controller through the indoor unit communicator and the outdoor unit communicator. The outdoor unit communicator may transmit a control signal generated by the outdoor unit controller to the indoor unit communicator, or transmit a control signal transmitted from the indoor unit communicator to the outdoor unit controller. That is, the indoor unit and the outdoor unit may perform bidirectional communication. The indoor unit and the outdoor unit may transmit and receive various signals generated during the operations of the air conditioner.

The outdoor unit controller may be electrically connected to the components of the outdoor unit, and control the operations of each component. For example, the outdoor unit controller may adjust the frequency of the compressor, and control the flow channel conversion valve such that the circulating direction of the refrigerant is converted. The outdoor unit controller may adjust the rotation speed of the outdoor fan. Also, the outdoor unit controller may generate a control signal for adjusting the opening degree of the expansion valve. Under the control of the outdoor unit controller, the refrigerant may circulate along refrigerant circulation circuitry including the compressor, the flow channel conversion valve, the outdoor heat exchanger, the expansion valve, and the indoor heat exchanger.

Various temperature sensors included in the outdoor unit and the indoor unit may respectively transmit electric signals corresponding to the detected temperatures to the outdoor unit controller and/or the indoor unit controller. For example, humidity sensors included in the outdoor unit and the indoor unit may respectively transmit electric signals corresponding to the detected humidity to the outdoor unit controller and/or the indoor unit controller.

The indoor unit controller may obtain a user input from a user device including a mobile device, etc., through the indoor unit communicator, and obtain a user input directly through the input interface or through a remote controller. The indoor unit controller may control the components of the indoor unit including the blowing device, etc., in response to the received user input. The indoor unit controller may transmit information related to the received user input to the outdoor unit controller of the outdoor unit.

The outdoor unit controller may control the components of the outdoor unit including the compressor, etc., based on information related to a user input received from the indoor unit. For example, if a control signal corresponding to a user input selecting a driving mode such as cooling driving, heating driving, blowing driving, defrosting driving, and dehumidifying driving is received from the indoor unit, the outdoor unit controller may control the components of the outdoor unit such that an operation of the air conditioner corresponding to the selected driving mode is performed.

The outdoor unit controller and the indoor unit controller may respectively include a processor and memory. The indoor unit controller may include at least one first processor and at least one first memory, and the outdoor unit controller may include at least one second processor and at least one second memory.

The memory may memorize/store various types of information for operations of the air conditioner. The memory may store instructions, applications, data, and/or programs for operations of the air conditioner. For example, the memory may store various programs for cooling driving, heating driving, dehumidifying driving, and/or defrosting driving of the air conditioner. The memory may include volatile memory such as static random access memory (S-RAM), dynamic random access memory (D-RAM), etc., for memorizing data temporarily. Also, the memory may include non-volatile memory such as read only memory (ROM), erasable programmable read only memory (EPROM), electrically erasable programmable read only memory (EEPROM), etc., for storing data during a long period.

The processor may generate a control signal for controlling the operations of the air conditioner based on the instructions, the applications, the data, and/or the programs stored in the memory. The processor is hardware, and may include a logic circuit and an operation circuit. The processor may process data according to a program and/or an instruction provided from the memory, and generate a control signal according to the processing result. The memory and the processor may be implemented as one control circuit, or implemented as a plurality of circuits.

The indoor unit of the air conditioner may include an output interface. The output interface may be electrically connected with the indoor unit controller, and output information related to the operations of the air conditioner under control of the indoor unit controller. For example, information such as the driving mode, the wind direction, the wind volume, and the temperature selected by a user input may be output. Also, the output interface may output sensing information obtained from the indoor unit sensor or the outdoor unit sensor, and warning/error messages.

The output interface may include a display and a speaker. The speaker is an audio device, and may output various sounds. The display may display information input by the user or information provided to the user as various graphic elements. For example, operation information of the air conditioner may be displayed as at least one from among an image and text. Also, the display may include an indicator providing specific information. The display may include a liquid crystal display (LCD) panel, a light emitting diode (LED) panel, an organic light emitting diode (OLED) panel, a micro LED panel, and/or a plurality of LEDs.

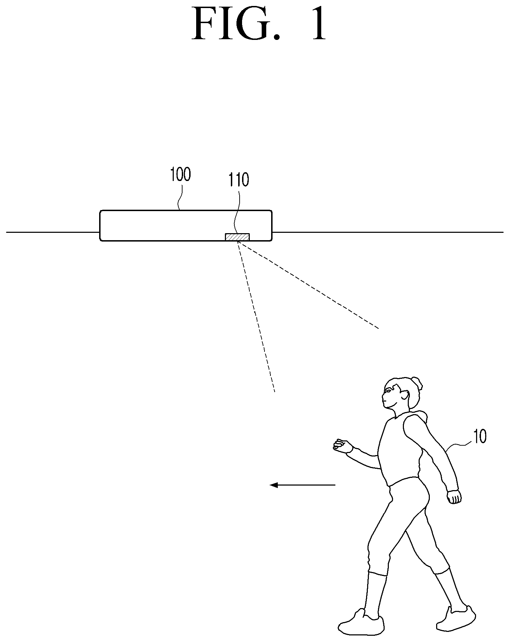

FIG. 1 is a diagram illustrating a situation wherein an air conditioner identifies a user according to at least one embodiment of the present disclosure.

In embodiments of the present disclosure, the air conditioner 100 may include air conditioners in various forms including a motion detection sensor 110.

For example, the air conditioner 100 may include a ceiling type indoor unit, a stand type indoor unit, a wall-mounted type indoor unit, etc. Also, in the present disclosure, explanation will be described based on a 1-way type indoor unit, but embodiments of the present disclosure are not limited thereto, and a 4-way type indoor unit may also be included.

After the air conditioner 100 is turned on, the air conditioner 100 may identify whether an object 10 and the air conditioner 100 exist in the same space by using the motion detection sensor 110 accommodated inside it. The object may include an object that exists in the space wherein the air conditioner 100 is located, and is movable, such as a person, a pet, etc.

A case where, even though the object 10 does not exist in the space, it is wrongly identified by the motion detection sensor 110 that the object 10 exists in the space may occur. Accordingly, if the air conditioner 100 determines that the object 10 exists in the space based only on the fact that the object was detected by the motion detection sensor 110, the accuracy may deteriorate in a comparative embodiment.

The air conditioner 100 according to at least one embodiment of the present disclosure may determine whether the object 10 exists in the space in consideration of the number of times of time sections wherein the object 10 is not detected within a predetermined time and the speed of the object 10 in case the object 10 was detected. Accordingly, the accuracy of recognition of the object 10 by the air conditioner 100 can be improved.

In the content that will be described below, a state wherein the object 10 and the air conditioner 100 exist in the same space will be expressed as a state of presence, and a state wherein the object 10 and the air conditioner 100 do not exist in the same space will be expressed as a state of absence.

Also, there may be a case wherein the air conditioner 100 detects a plurality of objects.

If it is identified that objects exist in a space, and there are a plurality of objects detected within a first time section through the motion detection sensor 110, the air conditioner 100 may control a blowing direction of air blown by the fan on the basis of the nearest object to the air conditioner 100 among the plurality of objects. A detailed description in this regard will be provided below.

Accordingly, a malfunction of the air conditioner 100 due to a detection error of the motion detection sensor 110 can be prevented.

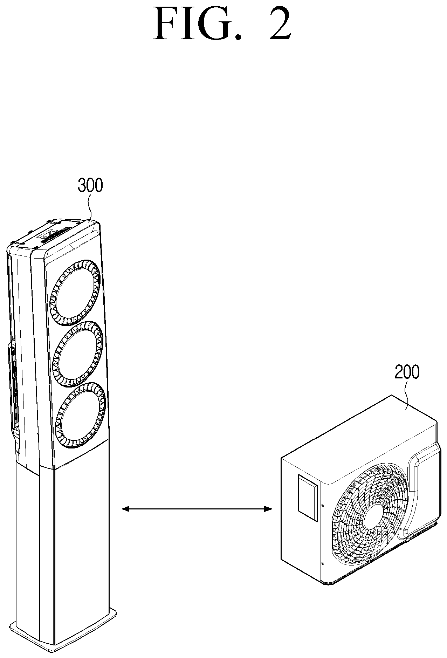

FIG. 2 is a diagram for illustrating an air conditioner according to at least one embodiment of the present disclosure.

Referring to FIG. 2, the air conditioner (e.g., the air conditioner 100) may include an indoor unit 300 and an outdoor unit 200. In this case, the air conditioner may be located in various places such as a house, an office, a store, a restaurant, etc.

Also, the indoor unit 300 and the outdoor unit 200 may be connected through a pipe. Further, the refrigerant may circulate between the indoor unit 300 and the outdoor unit 200 through the pipe.

The indoor unit 300 may blow air. For this, the indoor unit 300 may include a heat exchanger for exchanging heat of air suctioned into the indoor unit 300 through the suction hole with the refrigerant, and a fan for blowing the air whose heat was exchanged through the blowing hole, etc. The outdoor unit 200 may include a compressor for compressing the refrigerant, a heat exchanger for exchanging heat of the refrigerant with the outdoor air, and a fan for introducing the outdoor air into the heat exchanger and blowing the air whose heat was exchanged to the outside, etc.

Meanwhile, the air conditioner 100 may further include an expansion valve for expanding the refrigerant. In this case, the expansion valve may be arranged in the indoor unit 300 or the outdoor unit 200.

Accordingly, at the time of cooling driving, the indoor unit may control the temperature of the space wherein the indoor unit is located by vaporizing the refrigerant provided from the outdoor unit 200 and blowing the air whose temperature has been reduced in accordance thereto to the outside.

Also, the indoor unit 300 may communicate with the outdoor unit 200. For example, the indoor unit 300 may transmit a signal for controlling the outdoor unit 200 to the outdoor unit 200. Then, the outdoor unit 200 may control various kinds of operations of the components of the outdoor unit 200 based on the signal received from the indoor unit 300.

The aforementioned components of the indoor unit 300 and the outdoor unit 200 are merely one example for explaining the operations of the indoor unit 300 and the outdoor unit 200. That is, the indoor unit 300 and the outdoor unit 200 can further include various components for performing the function of cooling other than the aforementioned components, and can provide cold air through various methods.

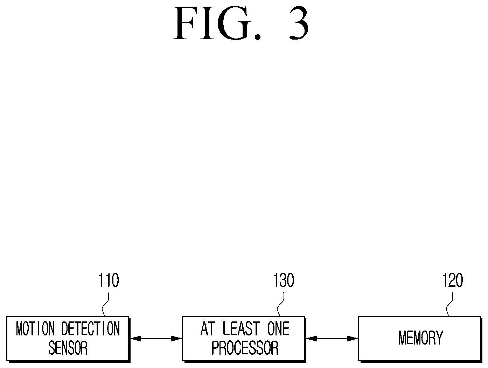

FIG. 3 is a block diagram for illustrating a configuration of an air conditioner according to at least one embodiment of the present disclosure.

Referring to FIG. 3, the air conditioner 100 according to at least one embodiment of the present disclosure may include a motion detection sensor 110, memory 120, and at least one processor 130.

The motion detection sensor 110 may detect an object. For example, the feature that the motion detection sensor 110 detects an object may include detecting the presence of an object and the speed of an object. For example, the motion detection sensor 110 may be arranged outside the housing of the air conditioner 100, or arranged inside the housing to be exposed to the outside of the housing.

The motion detection sensor 110 may be implemented as an infrared sensor, an ultrasonic sensor, a microwave sensor, an image sensor, a radar sensor, or a LiDAR sensor, etc. Hereinafter, description will be provided by assuming that the motion detection sensor 110 according to at least one embodiment of the present disclosure is a radar sensor.

The motion detection sensor 110 may detect an object based on a signal-to-noise ratio (SNR).

The motion detection sensor 110 may include a plurality of transmission/reception antennas. For example, the motion detection sensor 110 may include one transmission antenna and a plurality of reception antennas. However, embodiments of the present disclosure are not limited thereto, and the number of the transmission antennas and the reception antennas may be various values. The motion detection sensor 110 may transmit a signal to the outside of the air conditioner 100 by using the transmission antenna. The motion detection sensor 110 may transmit a radar signal in a range of 120° in left and right directions, and 160° in up and down directions. However, the range wherein the motion detection sensor 110 transmits a radar signal is not limited thereto, and there may be more various values.

If a signal transmitted from the transmission antenna is reflected by an object and is received by the reception antenna, the motion detection sensor 110 may calculate a ratio of the strength of the received signal and the strength of noise (e.g., a signal-to-noise ratio). Specifically, if the ratio of the strength of the signal and the strength of the noise is greater than or equal to a predetermined value, the motion detection sensor 110 may identify that an object was detected. In contrast, for a signal transmitted by the motion detection sensor 110, phenomena such as reflection, refraction, penetration, diffraction, etc., may be generated by radio waves from the outside. The strength of a signal generated by reflection or refraction, or penetration may be lower than the strength of a signal reflected from an object that actually exists. Accordingly, in case a signal transmitted by the motion detection sensor 110 is reflected or refracted, or penetrate, the signal-to-noise ratio (SNR) value may be calculated to be smaller than the predetermined value. If the SNR value is smaller than the predetermined value, the processor 130 may identify that an object does not exist. If the ratio of the strength of the signal and the strength of the noise is smaller than the predetermined value, the motion detection sensor 110 may identify that an object 10 was not detected.

However, an SNR value may be a relative value that changes according to the level of noise in the surroundings. That is, the motion detection sensor 110 detects an object based on a signal-to-noise ratio, but depending on the strength of noise, the motion detection sensor 110 may wrongly detect that an object exists even though an object does not actually exist in a comparative embodiment. A detailed description in this regard will be provided below.

The memory 120 may store data and programs for controlling the operations of the air conditioner 100. For example, the memory 120 may be implemented as memory embedded in the air conditioner 100 (e.g., volatile memory, non-volatile memory, a hard drive, or a solid state drive, etc.), or implemented as memory that can be attached to or detached from the air conditioner 100 (e.g., a memory card, external memory, etc.) depending on the usage of the stored data.

For example, the memory 120 may include permanent memory (e.g., non-volatile memory) such as a hard drive, flash memory, and read-only memory (ROM), semipermanent memory (e.g., volatile memory) such as random access memory (RAM), a storage (or a storage assembly) of any other suitable type, or any combination thereof.

Also, in the memory 120, at least one instruction may be stored. In this case, the at least one processor 130 may perform the operations of the air conditioner 100 according to the various embodiments of the present disclosure by executing the at least one instruction stored in the memory 120. Also, in the memory 120, programs and data for driving of the air conditioner 100 may be stored. In addition, in the memory 120, various kinds of software programs and various kinds of applications for the air conditioner 100 to operate may be stored.

The at least one processor 130 may control the overall operations of the air conditioner 100. For example, the at least one processor 130 may detect an object by using the motion detection sensor 110 by executing the at least one instruction stored in the memory 120, and based on detection of the object, identify a second time section wherein an object was not detected in a first time section through the motion detection sensor 110, and based on the second time section satisfying a predetermined first condition, identify an activity amount of the object 10 through the motion detection sensor 110, and based on the activity amount of the object 10 satisfying a predetermined second condition, identify that the object 10 is absent in the space.

The at least one processor 130 may include one or more from among a central processing unit (CPU), a graphics processing unit (GPU), an accelerated processing unit (APU), a many integrated core (MIC), a digital signal processor (DSP), a neural processing unit (NPU), a hardware accelerator, and a machine learning accelerator. The at least one processor 130 may control one or a random combination of other components of the air conditioner 100, and perform operations regarding communication or data processing. The at least one processor 130 may execute one or more programs or instructions stored in the memory 120. For example, the at least one processor 130 may perform the method according to an embodiment of the present disclosure by executing the one or more instructions stored in the memory 120.

In case the method according to an embodiment of the present disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 130 may be implemented as a single core processor including one core, or may be implemented as one or more multicore processors including a plurality of cores (e.g., multicores of the same kind or multicores of different kinds). In case the at least one processor 130 is implemented as multicore processors, each of the plurality of cores included in the multicore processors may include internal memory of the processor such as cache memory, on-chip memory, etc., and a common cache shared by the plurality of cores may be included in the multicore processors. Also, each of the plurality of cores (or some of the plurality of cores) included in the multicore processors may independently read a program instruction for implementing the method according to an embodiment of the present disclosure and perform the instruction, or the plurality of entire cores (or some of the cores) may be linked with one another, and read a program instruction for implementing the method according to an embodiment of the present disclosure and perform the instruction.

In case the method according to an embodiment of the present disclosure includes a plurality of operations, the plurality of operations may be performed by one core among the plurality of cores included in the multicore processors, or they may be implemented by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In embodiments of the present disclosure, the at least one processor 130 may include a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the present disclosure are not limited thereto. Hereinafter, the at least one processor 130 may be referred to as the term processor.

The processor 130 may be implemented as at least one integrated circuit (or circuitry) chip, and may execute various kinds of data processing. The processor 130 may include at least one electric circuit, and may dispersively process instructions (or programs, data, others, etc.) stored in the memory 120 independently or collectively. The processor 130 may include a processor assembly including at least one processing circuit. The processor 130 may include any operative processing circuit for controlling the performance and operations of one or more components (e.g., the motion detection sensor 110 and/or the memory 120) of the air conditioner 100. For example, the processor 130 (e.g., an application processor) may be implemented as a system on chip (SoC) (e.g., one chip or a chip set). For example, the processor 130 may be implemented as a plurality of cores (or at least one core circuit), a plurality of chips, or a plurality of chip sets. For example, the processor 130 may include one or more processing circuits. For example, the processor 130 may include one or more processing circuits that are constituted to individually and/or collectively perform several functions in embodiments of the present disclosure. As a non-limiting example, at least a part of the processor 130 may be included in a first chip of an electronic device (e.g., the outdoor unit 200), and at least another part of the processor 130 may be included in a second chip of the electronic device (e.g., the outdoor unit 200) different from the first chip of the electronic device (e.g., the outdoor unit 200).

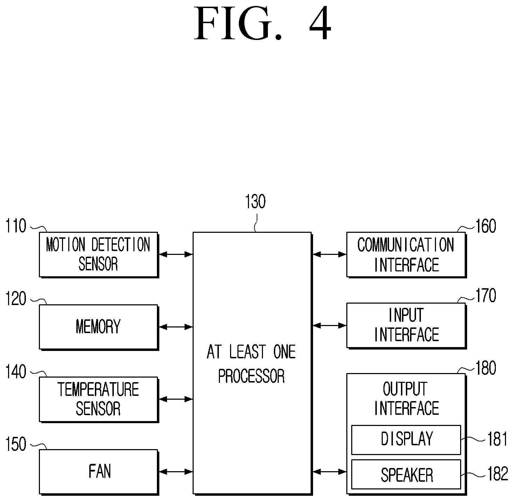

FIG. 4 is a block diagram for illustrating a detailed configuration of an air conditioner according to at least one embodiment of the present disclosure.

Referring to FIG. 4, the air conditioner 100 may include a motion detection sensor 110, memory 120, at least one processor 130, a temperature sensor 140, a fan 150, a communication interface 160, an input interface 170, and an output interface 180. However, these components are merely examples, and in embodiments of the present disclosure, other components can be added in addition to these components or some components can be omitted. Meanwhile, among the components illustrated in FIG. 4, repeated explanation regarding components that are the same or similar to the components illustrated in FIG. 3 may be omitted.

The temperature sensor 140 may detect temperatures. The temperature sensor 140 may detect a temperature for the space wherein the air conditioner 100 is located.

Also, a temperature detected by the temperature sensor 140 may be compared with the set temperature, and may be used in controlling the temperature of the space wherein the air conditioner 100 is located. In this case, the set temperature may be set by the user (e.g., the desired temperature), or may be set as a predetermined temperature according to the mode of the air conditioner.

The fan 150 may blow air. For this, as in FIG. 3, a blowing hole may be provided on the front surface of the air conditioner 100.

Here, the blowing hole may be an opening part for blowing air cooled at the air conditioner 100 to the outside of the air conditioner 100. That is, if air is suctioned into the air conditioner 100 through the suction hole provided on the rear surface of the air conditioner 100, the suctioned air may be cooled by the heat exchanger of the air conditioner 100. Then, the cooled air may be blown through the blowing hole by driving of the fan 150. Meanwhile, the blowing hole may be formed as a circle. However, this is merely an example, and the blowing hole may be implemented in various forms. Also, the expression "blowing air" may be replaced by the expression "discharging air."

In at least one embodiment of the present disclosure, a plurality of fans 150 may be arranged. The plurality of fans 150 may be driven simultaneously, or may be driven individually.

The communication interface 160 may include circuitry, and may communicate with an external device (e.g., a server device and/or an external device). The processor 130 may receive various kinds of data or information from an external device connected through the communication interface 160, and transmit various kinds of data or information to the external device.

The communication interface 160 may communicate with an external device through an ambient access point (AP). The access point (AP) may connect a local area network (LAN) to which the air conditioner 100 is connected to a wide area network (WAN) to which the external device is connected. The air conditioner 100 may be connected to the external device through the wide area network (WAN). Also, the communication interface 160 may perform Device to Device (D2D) communication with the external device. As an example, the communication interface 160 may perform near field communication with the external device not via the access point (AP).

The communication interface 160 may communicate with an external device by using various types of communication methods. For example, the communication interface 160 may include a LAN communication module such as an Ethernet module. The communication interface 160 may include a wireless communication module such as Wi-Fi, Wi-Fi Direct, Bluetooth, Bluetooth Low Energy (BLE), Zigbee, NFC, Z-Wave, infrared communication, etc. The communication interface 160 may include a cellular communication module such as 3rd Generation (3G), 3rd Generation Partnership Project (3GPP), Long Term Evolution (LTE), 5th Generation (5G), etc. Also, the communication interface 160 may include a communication module such as a high-definition multimedia interface (HDMI), a universal serial bus (USB), etc.

The input interface 170 may include circuitry. The input interface 170 may receive a user input, and transmit the user input to the processor 130. For example, the input interface 170 may receive various user inputs for setting or selecting various kinds of functions supported by the air conditioner 100.

The input interface 170 may include various types of input devices.

According to an embodiment, the input interface 170 may include physical buttons. The physical buttons may include function keys or dial buttons. The physical buttons may be implemented as one or more keys.

According to an embodiment, the input interface 170 may receive a user input by using a touch method. For example, the input interface 170 may be implemented as a touch screen that can perform the function of the display 181.

According to an embodiment, the input interface 170 may receive a user voice by a microphone of the input interface 170. The processor 130 may perform a function corresponding to the user voice by using voice recognition. For example, the processor 130 may convert the user voice into text data by using a speech to text (STT) function, obtain control command data based on the text data, and perform the function corresponding to the user voice based on the control command data. Depending on embodiments, the STT function may also be performed in an external server.

The output interface 180 may include a display 181 and a speaker 182.

The display 181 may display various screens. The processor 130 may display various kinds of notifications, messages, information, etc., related to the operations of the air conditioner 100 on the display 181.

The display 181 may be implemented as a display including self-luminous elements, or a display including non-self-luminous elements and a backlight. For example, the display 181 may be implemented as displays in various forms such as a liquid crystal display (LCD), an organic light emitting diodes (OLED) display, a light emitting diodes (LED) display, a micro LED display, a mini LED display, a quantum dot light-emitting diode (QLED) display, etc.

The speaker 182 may output an audio signal. The processor 130 may output a warning sound related to an operation of the air conditioner 100, a notification message, a response message corresponding to a user input, etc., through the speaker 182.

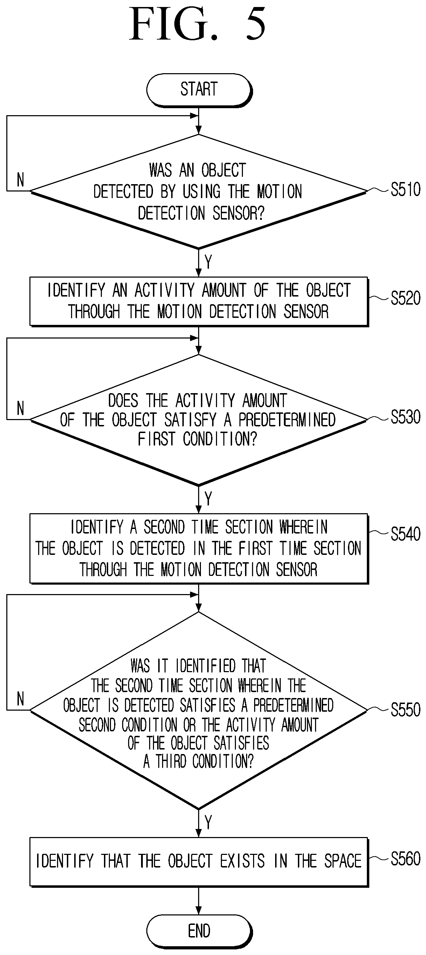

FIG. 5 is a flow chart for illustrating a control method of an air conditioner according to at least one embodiment of the present disclosure. When instructions are executed individually or collectively, the processor 130 may perform the operations in FIG. 5.

In the operation S510, the processor 130 may detect an object by using the motion detection sensor 110.

A signal directly reflected by a moving object may show a higher SNR value than the reference value. Here, the motion detection sensor 110may identify that an object was detected. Also, a signal weakened by a movement in a location farther than the measured distance or reflection, penetration, etc., may show a lower SNR value than the reference value. Here, the motion detection sensor 110may identify that an object was not detected.

Specifically, if a signal transmitted from the transmission antenna is reflected on an object and is received at the reception antenna as described above, the motion detection sensor 110 may compare the ratio of the strength of the received signal and the strength of noise. The strength of the signal and the strength of the noise may be average power of each radio wave. Here, if the ratio of the strength of the signal and the strength of the noise is greater than or equal to the predetermined value, the motion detection sensor 110 may identify that an object was detected. In contrast, if the ratio of the strength of the signal and the strength of the noise is smaller than the predetermined value, the motion detection sensor 110 may identify that an object was not detected. The predetermined value may have a value of the strength of the signal divided by the strength of the noise equal to 10⁷. For example, if the value of the strength of the signal / the strength of the noise is greater than or equal to 10⁷, the motion detection sensor 110 may identify that an object was detected, and if the value is smaller than 10⁷, the motion detection sensor 110 may identify that an object was not detected. The predetermined value is not limited to 10⁷, and may have various values.

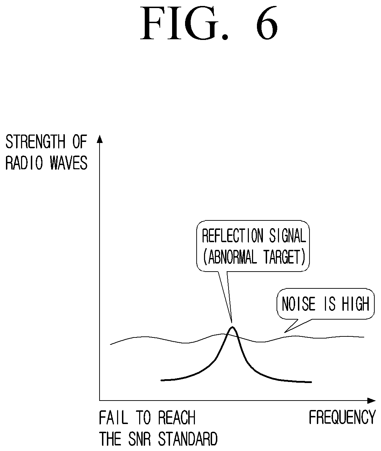

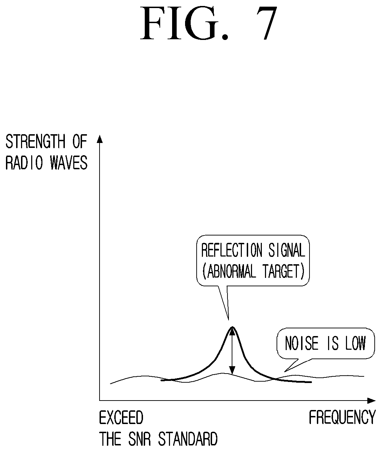

FIG. 6 and FIG. 7 are diagrams for illustrating a case wherein a detection error of a sensor is generated according to at least one embodiment of the present disclosure. In the examples of FIG. 6 and FIG. 7, a case wherein an object does not exist in a space is assumed.

Referring to FIG. 6, a signal transmitted from the motion detection sensor 110 may be reflected weakly, and received at the motion detection sensor 110.

The value of the strength of the signal divided by the strength of the noise at the motion detection sensor 110 may be lower than the predetermined value. In this case, the motion detection sensor 110 may identify that an object is not detected. The motion detection sensor 110 may generate a signal indicating that an object was not detected. The generated signal may be provided to the processor 130.

In contrast, referring to FIG. 7, in case a noise value is excessively lower than a general case, the value of the strength of the signal divided by the strength of the noise detected at the motion detection sensor 110 may be greater than or equal to the predetermined value. In this case, even though an object does not actually exist, the motion detection sensor 110 may generate a signal indicating that an object was detected. The generated signal may be provided to the processor 130. This situation may be referred to as a ghost phenomenon. The ghost phenomenon is when the motion detection sensor 110 detects that an object exists even though an object does not exist.

Due to such a ghost phenomenon in a comparative embodiment, if the processor 130 determines that the object 10 exists in the space based only on the fact that the object was detected by the motion detection sensor 110, the accuracy may deteriorate.

Accordingly, the processor 130 may identify whether an object is actually present in consideration of the number of times of time sections wherein an object is detected and an activity amount of the detected object, but may not determine that the object 10 exists in the space based only on the fact that the object was detected by the motion detection sensor 110. A detailed description in this regard will be provided below based on the operations S520 to S560.

In the operations S510 (when "YES") and S520, the processor 130 may identify an activity amount of an object through the motion detection sensor 110 (e.g., based on sensing by the motion detection sensor 110).

If an object is detected, the processor 130 may identify an activity amount of the object. For example, the activity amount of the object may include the moving speed of the object.

As described above, a signal transmitted from the transmission antenna of the motion detection sensor 110 may be reflected on an object and received at the reception antenna. The motion detection sensor 110 may detect the object based on the signal-to-noise ratio of the received signal. Here, the processor 130 may identify the distance between the air conditioner 100 and the object based on a difference between the time when the motion detection sensor 110 transmitted a signal and the time when the transmitted signal was reflected on the object and was received. The processor 130 may identify a coordinate value of the object by using a trigonometric ratio based on the angle of the signal received at the plurality of reception antennas and the distance and the angle between the air conditioner 100 and the object 10. Here, the coordinate value may be identified based on the distance from the air conditioner 100 to the object and the angle of the received signal while using the air conditioner 100 as the original point. Also, for the coordinate value, a centimeter (cm) unit may be used. Accordingly, the coordinate value may indicate in a distance of centimeters of how far the object is located from the air conditioner 100.

Then, the processor 130 may identify the moving speed of the object based on the coordinate value. Specifically, the processor 130 may identify the activity amount of the object by identifying the moving speed of the object by calculating a changed amount of the coordinate value of the object.

In the operations S530, the processor 130 may identify whether the activity amount of the object satisfies a predetermined first condition.

The predetermined first condition may include a condition that an object moves during a predetermined time or longer at a moving speed of a predetermined magnitude or larger. Accordingly, based on the moving speed of the object, if it is identified that the object moved during the predetermined time or longer at the moving speed of the predetermined magnitude or larger, the processor 130 may determine (e.g., identify) that the activity amount of the object satisfies the predetermined first condition.

Here, the predetermined time may be three seconds, and the moving speed of the predetermined object may be 15 cm/1.5 sec. However, embodiments of the present disclosure are not limited thereto, and the predetermined time and the moving speed may have various values.

For example, if it is detected that the moving time of the detected object is three seconds or longer, and the object moves at speed of 15 cm/1.5 sec or faster, the processor 130 may determine (e.g., identify) that the activity amount of the object satisfies the first condition.

Also, if it was detected that the detected object 10 moved at a moving speed of the predetermined magnitude or larger, but the moving time was shorter than the predetermined time, the processor 130 may determine (e.g., identify) that the activity amount of the object does not satisfy the first condition.

For example, if it was detected that the detected object 10 moved at moving speed of 15 cm/1.5 sec or faster, but the moving time was shorter than three seconds, the processor 130 may determine (e.g., identify) that the activity amount of the object does not satisfy the first condition.

Also, if it was detected that the moving time of the detected object 10 is the predetermined time or longer, but the moving speed is smaller than the predetermined magnitude, the processor 130 may identify that the activity amount of the object does not satisfy the first condition.

For example, if it was detected that the moving time of the detected object 10 is three seconds or longer, but the moving speed of the object 10 is smaller than 15cm/1.5sec, the processor 130 may determine (e.g., identify) that the activity amount of the object does not satisfy the first condition.

Based on the fact that the activity amount of the object does not satisfy the predetermined first condition (e.g., "NO" in operation S530), the processor 130 may determine (e.g., identify) that an object does not exist in the area wherein the air conditioner 100 is located, or may repeat operation S530.

In the operation S540, the processor 130 may identify the second time section wherein an object is detected in the first time section through the motion detection sensor 110 (e.g., based on sensing by the motion detection sensor 110).

According to an embodiment, the processor 130 may divide the first time section into a plurality of time sections based on the length of the predetermined second time section. For example, a case wherein the length of the first time section is 100 seconds, and the length of the predetermined time section is 10 seconds is assumed. In this case, the first time section having the length of 100 seconds may be divided into 10 time sections respectively having the length of 10 seconds. The processor 130 may identify one or more second time sections among the plurality of time sections. The second time section may be a time section wherein an object is detected by the motion detection sensor 110. If an object is detected by the motion detection sensor 110 even once in a time section, the time section may be a time section (e.g., a second time section) wherein an object was detected. Also, if an object is continuously not detected by the motion detection sensor 110 during a time section, the time section may be a time section (e.g., not a second time section) wherein an object was not detected.

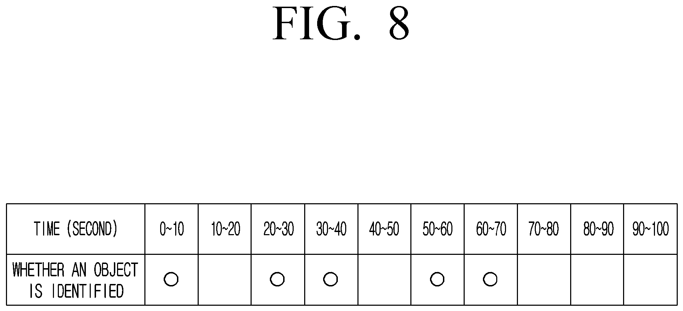

For example, referring to FIG. 8, an object may be detected only in the sections of 0-10 seconds, 20-30 seconds, 30-40 seconds, 50-60 seconds, and 60-70 seconds among the 10 time sections, and an object may not be detected in the remaining sections. In this case, the processor 130 may identify that the time section of 0-10 seconds, the time section of 20-30 seconds, the time section of 30-40 seconds, the time section of 50-60 seconds, and the time section of 60-70 seconds among the 10 time sections are the time sections (e.g., the second time sections) wherein an object is detected.

In the operation S550, the processor 130 may determine (e.g., identify) whether the second time section(s) wherein an object is detected satisfies the predetermined second condition or the activity amount of the object satisfies the third condition.

The predetermined second condition may include a condition that a number of the second time sections wherein an object is detected during the first time section is equal to or greater than a predetermined number.

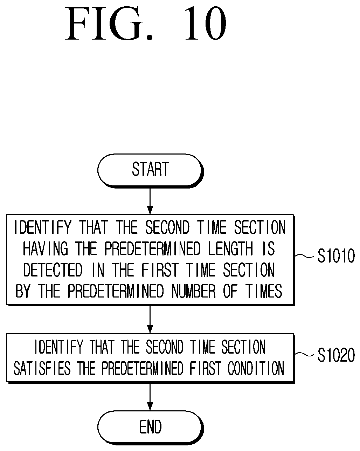

Referring to FIG. 10, in the operations S1010 and S1020, if it is identified that the second time section having the predetermined length is detected in the first time section a predetermined number of times, the processor 130 may identify that the second time section satisfies the predetermined second condition. For example, if it is identified that a number of the second time section having the predetermined length is detected in the first time section to be equal to or greater than the predetermined number, the processor 130 may identify that the second time section satisfies the predetermined second condition.

For example, the predetermined number of times may be five times, but is not limited thereto, and it may be set as various values. In the example in FIG. 8, there are five sections wherein an object is detected during the ten time sections. In this case, the number of the time sections (e.g., second time sections) wherein an object is detected (e.g., five) may be equal to or greater than the predetermined number of times. In this case, the processor 130 may determine (e.g., identify) that the second time section (e.g., the number of the second time sections) satisfies the predetermined second condition.

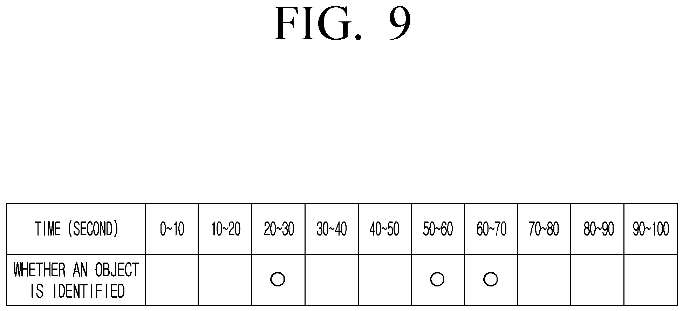

In contrast, referring to FIG. 9, an object may be detected in the sections of 20-30 seconds, 50-60 seconds, and 60-70 seconds among the 10 time sections of the first time section, and an object may not be detected in the remaining sections. In this case, the number of the time sections (e.g., the second time sections) wherein an object is detected (e.g., three) may be smaller than the predetermined number of times. In this case, the processor 130 may determine (e.g., identify) that the second time section does not satisfy the predetermined second condition.

The predetermined third condition may include a condition that an object moves during the predetermined time or longer at a moving speed of the predetermined magnitude or larger.

The determination method for the predetermined third condition may be identical to the determination method of the predetermined first condition, and thus repeated descriptions regarding the determination method may be omitted.

Similar to when determining (e.g., identifying) whether the predetermined second condition is satisfied, the processor 130 may determine (e.g., identify) whether the predetermined third condition is satisfied in the first time section.

If it is determined (e.g., identified) that an object does not satisfy the predetermined second condition during the first time section, the processor 130 may delete the measurement data from a starting point of reckoning of the first time section to the time (e.g., a start time) corresponding to the second time section (e.g., a first detected second time section).

Also, the processor 130 may measure the data from the time point when the measurement data was deleted to a length of time corresponding to the first time section, and identify whether the object satisfies the predetermined second condition and whether the activity amount of the object satisfies the predetermined third condition.

For example, it is assumed that the length of the first time section is 100 seconds (e.g., such that an initial first time section is from 0 to 100 seconds) and the second time section starts at 10 seconds.

In case the object did not satisfy the predetermined second condition during the initial 100 seconds, the processor 130 may delete the measurement data of the initial 10 seconds. Here, the processor 130 may obtain the data from 10 seconds after starting to detect presence of the object until 100 seconds after that (e.g., the data from 10 seconds after the time point of starting measurement as the starting point until 110 seconds ). The processor 130 may determine (e.g., identify) whether the object satisfies the predetermined second condition and whether the activity amount of the object satisfies the predetermined third condition based on the obtained data.

In the operation S560, the processor 130 may determine (e.g., identify) that the object exists in the space based on the fact that the predetermined second condition or the third condition is satisfied with respect to the object. The space may mean the space wherein the air conditioner 100 is located. Accordingly, if it is determined (e.g., identified) that the first condition and the second condition, or the first condition and the third condition, are satisfied with respect to the object, the processor 130 may determine (e.g., identify) that the object 10 exists in the space.

Specifically, based on the fact that the activity amount of the object satisfies the first condition, if the second time section wherein the object is detected satisfies the predetermined second condition, the processor 130 may determine (e.g., identify) that the object exists in the space.

For example, if the object moves during the predetermined time or longer at moving speed of the predetermined magnitude or larger, and a number of the second time sections wherein the object is detected in the first time section is greater than or equal to the predetermined number, the processor 130 may identify that the object exists in the space.

Also, even if the number of second time sections wherein the object is detected does not satisfy the predetermined second condition, based on the fact that the activity amount of the object satisfies the first condition, the processor 130 may identify that the object exists in the space if the activity amount of the object satisfies the third condition.

For example, if the object moves during the predetermined time or longer at a moving speed of the predetermined magnitude or larger, and the object additionally moves during the predetermined time or longer at a moving speed of the predetermined magnitude or larger in the first time section, the processor 130 may identify that the object exists in the space.

In contrast, based on the fact that the number of second time section does not satisfy the predetermined second condition and the activity amount of the object does not satisfy the predetermined third condition (e.g., "NO" in operation S550), the processor 130 may identify that the object does not exist in the area wherein the air conditioner 100 is located, or may repeat operation S550.

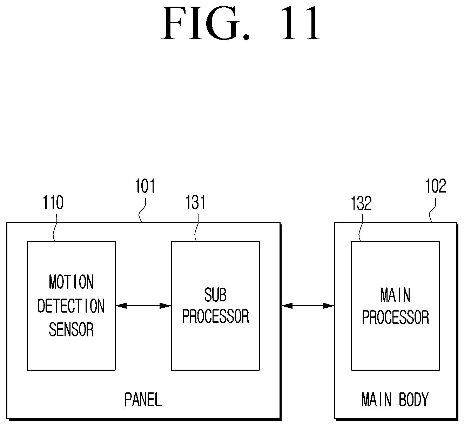

The aforementioned operations of the processor 130 may be performed by a plurality of processors 130. FIG. 11 is a block diagram for illustrating a process wherein a plurality of processors communicate with a motion detection sensor according to at least one embodiment of the present disclosure.

Referring to FIG. 11, on a panel 101 of the air conditioner 100, the motion detection sensor 110 and a sub processor 131 may be attached. Also, on the inside of the main body 102 of the air conditioner 100, a main processor 132 may be attached.

The motion detection sensor 110, the sub processor 131, and the main processor 132 are connected with one another via a wire(s), and can thus perform wired communication.

Other than detecting an object, the motion detection sensor 110 may identify a coordinate value of an object based on the distance from the air conditioner 100 to the object and a reception angle of a reflected radar signal.

The motion detection sensor 110 may transmit the identified information to the sub processor 131 per a predetermined first time. The predetermined first time may be 0.15 seconds, but is not limited thereto, and it may have various values.

Specifically, the motion detection sensor 110 may transmit whether an object was detected to the sub processor 131. Other than this, the motion detection sensor 110 may transmit a coordinate value of an object and a distance value from the air conditioner 100 to the object to the sub processor 131. The motion detection sensor 110 may identify three objects at the maximum, and transmit the coordinate values and the distance values of each object to the sub processor 131. The number of objects that the motion detection sensor 110 can detect at the maximum is not limited thereto, and the motion detection sensor 110 can detect more than three objects.

The sub processor 131 may determine the speed of the object based on the information received from the motion detection sensor 110, and determine whether the object is present.

Specifically, the sub processor 131 may receive the information on whether an object is detected by an interval of a predetermined first time from the motion detection sensor 110.

If the information on whether an object is detected is received a predetermined first number of times from the motion detection sensor 110, and if the number of times that the object was detected is a predetermined second number of times or more among the predetermined first number of times, the sub processor 131 may identify that the object exists.

For example, it is assumed that the predetermined first number of times is ten times, and the predetermined second number of times is eight times.

The sub processor 131 may receive the information on whether an object is detected ten times, during respective intervals of 0.15 seconds, from the motion detection sensor 110.

If the number of times that the object was detected is eight times or more among the received ten pieces of information, the sub processor 131 may identify that the object exists.

In contrast, if the number of times that the object was detected is smaller than the predetermined second number of times among the predetermined first number of times, the sub processor 131 may identify that the object does not exist.

For example, if the number of times that the object was detected is smaller than eight times among the received ten pieces of information, the sub processor 131 may identify that the object does not exist.

Also, as the sub processor 131 received the information on whether an object is detected by the predetermined first number of times, during the respective intervals of the predetermined first time, the sub processor 131 may identify that the object existed for a time length up to the product of the predetermined first time interval multiplied by the predetermined first number of times.

For example, it is assumed that the sub processor 131 received the information on whether an object is detected ten times, during respective intervals of 0.15 second from the motion detection sensor 110, and the object was detected eight times or more.

Here, the sub processor 131 may identify that the object exists for 1.5 seconds (e.g., 10 x 0.15).

In the operation S540 in FIG. 5, the feature that the object was detected once may mean that the object was identified during the time up to an amount of time equal to the product of the interval of the predetermined first time multiplied by the predetermined first number of times.

The sub processor 131 may improve the accuracy of object detection by identifying whether an object exists based on a plurality of pieces of information that the motion detection sensor 110 transmits to the sub processor 131.

According to one or more embodiments of the present disclosure, it may be identified whether an object actually exists by the method described above with reference to FIG. 5, despite the ghost phenomenon.

The sub processor 131 may identify whether an object exists, and transmit the information to the main processor 132 per a predetermined second time.

The predetermined second time may be one second, but is not limited thereto, and the predetermined second time may be various values. Also, the information may include the number of the identified objects and an average value for the speed of the objects.

In addition, the average value for the speed of the objects may be an average value for the speed of the objects that the motion detection sensor 110 transmitted the predetermined first number of times to the sub processor 131.

For example, the sub processor 131 may transmit the information to the main processor 132 every one second.

Also, the sub processor 131 may calculate an average speed during the time, up to an amount of time equal to the product of the interval of the predetermined first time multiplied by the predetermined first number of times of the objects, and transmit it to the main processor 132.

Accordingly, the sub processor 131 may transmit the information on the average speed during the time, up to an amount of time equal to the product of the interval of the predetermined first time multiplied by the predetermined first number of times of the objects, and the number of the identified objects to the main processor 132 every one second.

The main processor 132 may control the air conditioner 100 based on a command of the sub processor 131.

Specifically, in case it was identified that an object is present, the main processor 132 may control the fan 150 included in the air conditioner 100 to blow air.

In the present disclosure, in case an object is present, a state wherein the main processor 132 can control the fan 150 to blow air may be expressed as a presence mode.

In contrast, in case it was identified that an object is absent, the main processor 132 may control the fan 150 included in the air conditioner 100 to not blow air, or blow air in a small amount (e.g., a smaller amount than in a case where the fan 150 is controlled to blow air during the presence mode). In the present disclosure, in case an object is absent, a state wherein the main processor 132 controls the fan 150 not to blow air, or blow air in a small amount, may be expressed as an absence mode.

If an object is detected in the absence mode and the mode is changed to the presence mode, the main processor 132 may control the fan 150 to blow air based on the location of the object.

Also, in the aforementioned example, there may be a plurality of motion detection sensors 110. In case a plurality of motion detection sensors 150 are attached on the air conditioner 100, a blind spot that may be generated when there is one motion detection sensor 110 may be avoided, and the accuracy of identification can thereby be improved.

Base on the fact that an object is identified in the space, the processor 130 may control the direction of the wind of the air conditioner 100 based on the location of the object.

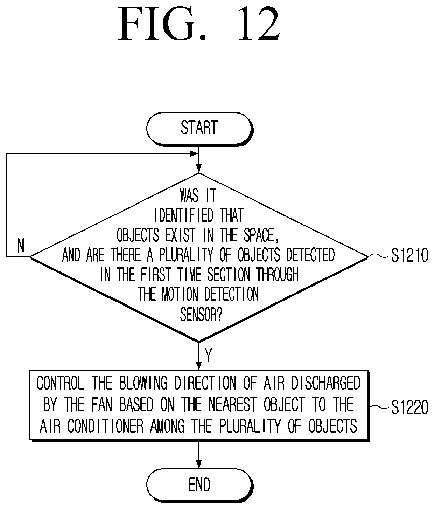

In this case, for a comparative embodiment, the ghost phenomenon may also be a problem. Specifically, a phenomenon wherein, even though the motion detection sensor 110 detected a plurality of objects, but some of the detected objects do not exist may be a problem. A control method of the air conditioner 100 in this regard will be described below based on FIG. 12.

With reference to FIG. 12, in the operation S1210, based on the fact that it is identified that an object exists in the space, the processor 130 may identify whether there are a plurality of objects detected in the first time section via the motion detection sensor 110.

As described above, the motion detection sensor 110 may detect a plurality of objects.

Specifically, the sub processor 131 may receive information that a plurality of objects are detected from the motion detection sensor 110. Here, if information on the plurality of objects is respectively received the predetermined first number of times, and if the number of times that the objects were detected is respectively the predetermined second number of times or more among the predetermined first number of times, the sub processor 131 may identify that a plurality of objects exist.

The processor 130 may divide the space wherein the air conditioner 100 is located into a plurality of areas, and determine (e.g., identify) in which areas the objects in the space are located among the divided areas.

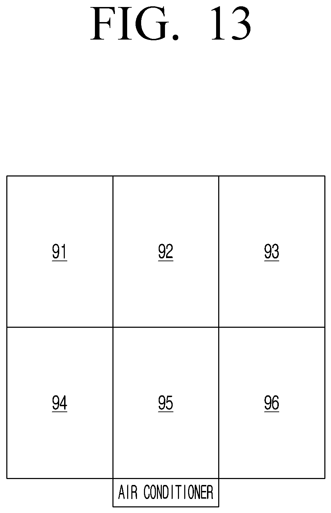

FIG. 13 is a diagram for illustrating a method for an air conditioner to divide a space according to at least one embodiment of the present disclosure.

Referring to FIG. 13, the processor 130 may divide the space wherein the air conditioner 100 is located into an upper area and a lower area based on the location of the air conditioner 100, and divide the upper area and the lower area respectively into a left area, a middle area, and a right area.

For example, the plurality of areas may include upper areas (areas 91, 92, and 93), lower areas (areas 94, 95, and 96), left areas (areas 91 and 94), middle area (areas 92 and 95), and right areas (areas 93 and 96).

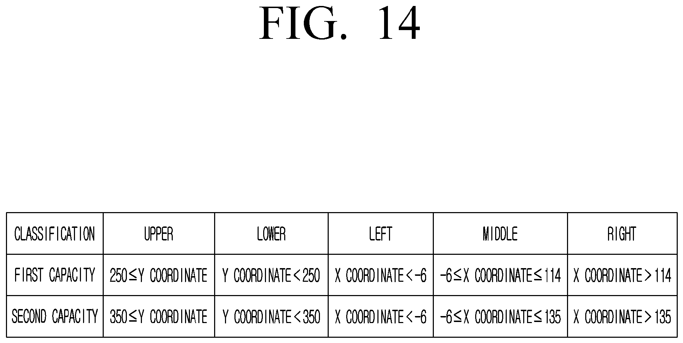

Also, FIG. 14 a table for illustrating a standard for an air conditioner to divide a space according to at least one embodiment of the present disclosure.

Referring to FIG. 14, in the memory 120, a plurality of reference values for dividing the space wherein the air conditioner 100 is located into a plurality of areas may be stored.

Also, the plurality of reference values may vary according to the capacity of the air conditioner 100. The capacity of the air conditioner 100 may be an index that indicates how much heat the air conditioner 100 can remove during one hour, and it may mainly mean cooling capability. Accordingly, as the capacity of the air conditioner 100 is bigger, the air conditioner 100 can remove more heat during one hour, and thus, as the capacity of the air conditioner 100 is bigger, the air conditioner 100 is more advantageous for removing heat of a bigger space.

For example, an air conditioner of the first capacity may identify, with the point on which the air conditioner is located as the origin point, an area which is distanced from the air conditioner by +250 cm or more in the Y axis direction as an upper area (e.g., the areas 91, 92, and 93), and an area which is distanced from the air conditioner by smaller than +250 cm in the Y axis direction as a lower area (e.g., the areas 94, 95, and 96).

Also, the air conditioner may identify an area which is distanced from the air conditioner by smaller than -6 cm in the X axis direction as a left area (e.g., the areas 91 and 94), and an area which is distanced from the air conditioner by -6 cm or more and 114 cm or smaller in the X axis direction as a middle area (e.g., the areas 92 and 95), and an area which is distanced from the air conditioner exceeding 114 cm in the X axis direction as a right area (e.g., the areas 93 and 96).

As an air conditioner of the second capacity is generally used in a bigger space than an air conditioner of the first capacity, its reference value of dividing the space may be bigger than the reference value of the air conditioner 100 of the first capacity.

For example, an air conditioner of the second capacity may identify, with the point on which the air conditioner is located as the origin point, an area which is distanced from the air conditioner by +350 cm or more in the Y axis direction as an upper area (e.g., the areas 91, 92, and 93), and an area which is distanced from the air conditioner by smaller than +350 cm in the Y axis direction as a lower area (e.g., the areas 94, 95, and 96).

Also, the air conditioner may identify an area which is distanced from the air conditioner by smaller than -6 cm in the X axis direction as a left area (e.g., the areas 91 and 94), and an area which is distanced from the air conditioner by -6 cm or more and 135 cm or smaller in the X axis direction as a middle area (e.g., the areas 92 and 95), and an area which is distanced from the air conditioner exceeding 135 cm in the X axis direction as a right area (e.g., the areas 93 and 96).

In addition, the processor 130 may identify whether an object is located at a near distance from the air conditioner 100, and another object is located at a far distance from the air conditioner 100 among the plurality of objects.

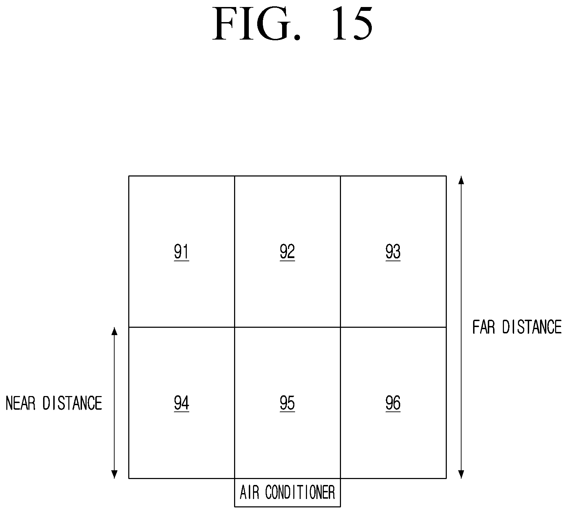

Referring to FIG. 15, the processor 130 may divide the plurality of areas located in the upper area as areas of a far distance, and the plurality of areas located in the lower area as areas of a near distance.

The processor 130 may identify a case wherein it is identified that a plurality of objects exist, and the plurality of objects are located both at a far distance and at near distance.

Based on the fact that an object is identified in the space, the processor 130 may control the direction of the wind on the basis of the location of the object.

If it is identified that an object and another object are located at a near distance and a far distance, the processor 130 may control the blowing direction of air blown by the fan based on the object located at the near distance.

The blowing methods of the blown air may include a direct wind method and an indirect wind method.

The direct wind method may be a method wherein the blown air is directly blown on a location wherein an object is located. Also, the indirect wind method may be a method wherein the blown air is not directly blown on a location wherein an object is located. Specifically, the indirect wind method may be a method wherein the blown air is blown to be reflected by a wall surface or a ceiling, etc., while avoiding an object.

When the blowing method of air is the direct wind method, and an object is located at a far distance, the processor 130 may blow air in the direction of the ceiling by adjusting the upper and lower blades of the air conditioner 100. Also, when the blowing method of air is the direct wind method, and an object is located at a near distance, the processor 130 may blow air in the direction of the ground (e.g., a downward direction) by adjusting the upper and lower blades of the air conditioner 100.

In contrast, when the blowing method of air is the indirect wind method, and an object is located at a far distance, the processor 130 may blow air in the direction of the ground (e.g., a downward direction) by adjusting the upper and lower blades of the air conditioner 100. Also, when the blowing method of air is the indirect wind method, and an object is located at a far distance, the processor 130 may blow air in the direction of the ceiling (e.g., in upward direction) by adjusting the upper and lower blades of the air conditioner 100.

For example, in case the blowing method of air is the direct wind method, if objects are located in left, middle, and right areas, the processor 130 may blow air respectively to the left, middle, and right areas. Also, if objects are detected simultaneously in the left and middle areas and the middle and right areas, the processor 130 may blow air to the middle area. Also, if objects are detected simultaneously in the left and right areas, the processor 130 may blow air alternatingly in the left and right areas. In addition, if objects are detected simultaneously in the left, middle, and right areas, the processor 130 may blow air to the middle area.

Also, in case the blowing method of air is the indirect wind method, if objects are located in the left, middle, and right areas, the processor 130 may blow air respectively to the middle area.

Also, if objects are detected simultaneously in the left and middle areas, the processor 130 may blow air to the right area. In addition, if objects are detected simultaneously in the middle and right areas, the processor 130 may blow air to the left area. If objects are detected simultaneously in the left and right areas, or detected in all of the left, middle, and right areas, the processor 130 may blow air to the middle area.

In case the motion detection sensor 110 detected a plurality of objects, some of the plurality of objects may be objects that do not actually exist due to a ghost phenomenon.

Accordingly, for preventing a malfunction of the air conditioner 100 due to a ghost phenomenon, the processor 130 may control blowing of air based on the distance between the air conditioner 100 and the objects.

In the operation S1220, the processor 130 may control the blowing direction of the air based on the nearest object to the air conditioner among the plurality of objects.

Specifically, even though the processor 130 detected that a plurality of objects were identified, some of the plurality of objects may not exist. In case a ghost phenomenon was generated, as a received signal is detected weakly, the processor 130 may identify that objects are located at a far distance.

Accordingly, in case the processor 130 detected a plurality of objects, an object that was identified to be located in the farthest distance may be an object that does not actually exist.

In contrast, in case an object actually exists, as a received signal is detected strongly, the processor 130 may identify that the object is located at a relatively near distance.

Accordingly, if a plurality of objects are detected simultaneously in a near distance and a far distance, an object that was identified to be located at a far distance may not actually exist, and thus the processor 130 may control the blowing direction of air based on an object located at a near distance.

For example, it is assumed that a plurality of objects are detected simultaneously at a near distance and a far distance, and the blowing method of air is a direct wind method.

Here, the processor 130 may blow the air to the direction of the ground based on an object located at a near distance.

Also, it is assumed that the blowing method of air is an indirect wind method.

Here, the processor 130 may blow the air to the direction of the ceiling based on an object located at a near distance.

Accordingly, a phenomenon wherein the air conditioner 100 malfunctions due to a ghost phenomenon can be prevented.

Meanwhile, the various embodiments of the present disclosure may be implemented in a recording medium that can be read by a computer or a device the same as or similar to a computer, by using software, hardware, or a combination thereof. In some cases, the embodiments described in this specification may be implemented as a processor(s) itself. According to implementation by software, the embodiments such as procedures and functions described in this specification may be implemented as separate software modules. Each of the software modules can perform one or more functions and operations described in this specification.

Meanwhile, computer instructions for performing processing operations of the air conditioner 100 according to the aforementioned various embodiments of the present disclosure may be stored in a non-transitory computer-readable medium. Computer instructions stored in such a non-transitory computer-readable medium may make the processing operations at the air conditioner 100 according to the aforementioned various embodiments performed by a specific machine, when the instructions are executed by the processor of the specific machine.

A non-transitory computer-readable medium refers to a medium that stores data semi-permanently, and is readable by machines, but not a medium that stores data for a short moment such as a register and a cache. As specific examples of a non-transitory computer-readable medium, there may be a CD, a DVD, a hard disc, a blue-ray disc, a USB, a memory card, ROM, and the like.

Non-limiting example embodiments of the present disclosure have been described above with reference to the accompanying drawings. However, the present disclosure is not limited to the aforementioned embodiments and/or drawings. It should be clearly understood that alterations and modifications of embodiments of the present disclosure, that would be understood by a person having ordinary knowledge in the art, are within the scope of the present disclosure.

## Claims

1. An air conditioner comprising:
a motion detection sensor configured to detect a movement of an object in a space;
at least one processor comprising processing circuitry;
a memory comprising instructions, wherein the instructions are configured to, when executed individually or collectively by the at least one processor, cause the at least one processor to:
determine, based on the motion detection sensor detecting the object, an activity amount of the object via the motion detection sensor,
determine, based on the activity amount of the object satisfying a predetermined first condition, whether a number of second predetermined time sections, in a first predetermined time section, in which the object is detected via the motion detection sensor satisfies a predetermined second condition, or whether the activity amount of the object detected via the motion detection sensor in the first predetermined time section satisfies a predetermined third condition, and
determine, based on determining that the predetermined second condition or the predetermined third condition is satisfied, that the object exists in the space.

2. The air conditioner of claim 1, further comprising:
a fan configured to blow cooled air to an outside of the air conditioner,
wherein the instructions are further configured to, when executed individually or collectively by the at least one processor, cause the at least one processor to:
determine that a plurality of objects, including the object, exist; and
control, based on determining that the plurality of objects exists, a blowing direction of the cooled air blown by the fan on a basis of a nearest object to the air conditioner among the plurality of objects.

3. The air conditioner of claim 2, wherein the instructions are further configured to, when executed individually or collectively by the at least one processor, cause the at least one processor to:
determine whether a first object, among the plurality of objects, is located at a first distance from the air conditioner, and a second object, among the plurality of objects, is located at a second distance from the air conditioner, the second distance being greater than the first distance, and
control, based on determining that the first object and the second object are located at the first distance and the second distance, respectively, the blowing direction of the cooled air blown by the fan on the basis of the first object located at the near distance.

4. The air conditioner of claim 3, wherein the instructions are further configured to, when executed individually or collectively by the at least one processor, cause the at least one processor to:
blow the cooled air in a direct wind mode and an indirect wind mode;
blow, based on a blowing mode of the air conditioner being a direct wind mode, the cooled air in a direction towards a ground in a case where the cooled air is blown by the fan on the basis of the first object being located at the near distance, and
blow, based on the blowing mode of the air conditioner being the indirect wind mode, the cooled air in a direction towards a ceiling in a case where the cooled air is blown by the fan on the basis of the first object being located at the near distance.

5. The air conditioner of claim 1, wherein the instructions are further configured to, when executed individually or collectively by the at least one processor, cause the at least one processor to:
determine, based on the activity amount not satisfying the predetermined first condition, that the object does not exist in the space.

6. The air conditioner of claim 1, wherein the instructions are further configured to, when executed individually or collectively by the at least one processor, cause the at least one processor to:
determine a coordinate value of the object via the motion detection sensor, and
determine the activity amount of the object based on determining a moving speed of the object based on the coordinate value of the object.

7. The air conditioner of claim 6, wherein the instructions are further configured to, when executed individually or collectively by the at least one processor, cause the at least one processor to:
determine, based on determining that the object moved during a predetermined time or longer at a moving speed of a predetermined magnitude or larger on a basis of the moving speed of the object that was determined, that the activity amount of the object satisfies the predetermined first condition.

8. The air conditioner of claim 1, wherein the instructions are further configured to, when executed individually or collectively by the at least one processor, cause the at least one processor to:
determine, based on the number of the second predetermined time sections not satisfying the predetermined second condition and the activity amount of the object not satisfying the predetermined third condition, that the object does not exist in the space.

9. The air conditioner of claim 1, wherein the motion detection sensor is a radar sensor.

10. A control method of an air conditioner, the control method comprising:
detecting an object via a motion detection sensor;
determining, based on the detecting of the object via the motion detection sensor, an activity amount of the object via the motion detection sensor;
determining whether the activity amount of the object satisfies a predetermined first condition;
determining, based on the activity amount of the object satisfying the predetermined first condition, whether a number of second predetermined time sections, in a first predetermined time section, in which the object is detected via the motion detection sensor satisfies a predetermined second condition, or whether the activity amount of the object detected via the motion detection sensor in the first predetermined time section satisfies a predetermined third condition; and
determining, based on determining whether the predetermined second condition or the predetermined third condition is satisfied, whether the object exists in a space.

11. The control method of claim 10, further comprising:
determining that a plurality of objects, including the object, exist; and
controlling, based on determining that the plurality of objects exists, a blowing direction of cooled air, blown by a fan, on a basis of a nearest object to the air conditioner among the plurality of objects.

12. The control method of claim 11, wherein the controlling the blowing direction of the cooled air comprises:
determining whether a first object, among the plurality of objects, is located at a first distance from the air conditioner, and a second object, among the plurality of objects, is located at a second distance from the air conditioner, the second distance being greater than the first distance; and
controlling, based on determining that the first object and the second object are located at the first distance and the second distance, respectively, the blowing direction of the cooled air on the basis of the first object located at the near distance.

13. The control method of claim 12, wherein the controlling the blowing direction of the cooled air further comprises:
blowing, based on a blowing mode of the air conditioner being a direct wind mode, the cooled air in a direction towards a ground in a case where the cooled air is blown by the fan on the basis of the first object being located at the near distance; or
blowing, based on the blowing mode of the air conditioner being an indirect wind mode, the cooled air in a direction towards a ceiling in a case where the cooled air is blown by the fan on the basis of the first object being located at the near distance.

14. The control method of claim 10, wherein the determining the activity amount of the object comprises:
determining a coordinate value of the object; and
determining the activity amount of the object by identifying a moving speed of the object based on the coordinate value of the object.

15. The control method of claim 10, wherein the determining whether the object exists in the space comprises determining, based on determining that the predetermined second condition or the predetermined third condition is satisfied, that the object exists in the space.
